# EUROPÄISCHE PATENTANMELDUNG

(11) **EP 1 398 284 A2**
(43) Veröffentlichungstag der Anmeldung: **17.03.2004**
(21) Anmeldenummer: 03018892.4
(22) Anmeldetag: 20.08.2003
(51) Int. Cl.: B65G 47/14

(54) **Vorrichtung zum Vereinzeln und Ausrichten von Kleinteilen**

(30) Priorität: 14.09.2002 DE 10242855
(71) Anmelder: Böllhoff Systemtechnik GmbH & Co.KG, 33649 Bielefeld (DE)
(72) Erfinder: Labach, Volker, Dipl.-Ing., 59558 Lippstadt (DE)
(74) Vertreter: Dantz, Jan Henning

(57) **Zusammenfassung**

Eine Vorrichtung zum Vereinzeln und Ausrichten von jeweils mit einem Kopf versehenen Kleinteilen, wie Schrauben, Nieten oder dergleichen, die als Schüttgut in einem Vorratsbehälter (1) deponiert sind, ist so ausgebildet, dass dem Vorratsbehälter (1) eine Vereinzelungseinrichtung (2) nachgeordnet ist, an die sich eine mit einer Übergabevorrichtung (4) verbundene Ausrichtstation (3) zum lagegenauen Positionieren und Übergeben jedes Kleinteiles an eine Verarbeitungseinheit anschließt.

## Beschreibung

Die vorliegende Erfindung betrifft eine Vorrichtung zum Vereinzeln und Ausrichten von Kleinteilen gemäß dem Oberbegriff des Anspruches 1.

Solche Vorrichtungen finden Verwendung, um als Schüttgut vorliegende Schrauben, Nieten oder andere Verbindungselemente zu separieren und lagegenau auszurichten, so dass sie einer Verarbeitungseinheit, beispielsweise einem Montageautomaten oder dergleichen, definiert übergeben werden können.

Dabei weisen diese Vorrichtungen, mit denen die einen Kopf aufweisenden Kleinteile ausgerichtet werden, weisen zum Beispiel einen schwingend angetriebenen Fördertopf auf, der innenseitig Förderrinnen besitzt, über die die im Inneren des Fördertopfes als Schüttgut einliegenden Kleinteile zu einem oberen Ausgang gefördert werden, wo sie dann in einer Sortierschikane lagegenau ausgerichtet und im weiteren Verlauf einer Vereinzelungseinrichtung zugeführt werden, die die einzelnen Kleinteile in einer bestimmten Abfolge einer Verarbeitungseinheit zur Weiterverwendung übergibt. Dabei werden die Kleinteile beispielsweise über einen Linearförderer von der Sortierschikane, die eine Ausrichtstation darstellt, zur Vereinzelungseinheit gefördert.

Die bekannten Vorrichtungen sind nur mit einem erheblichen apparativen Aufwand hinsichtlich ihrer Einzelkomponenten zu realisieren und zeichnen sich überdies dadurch aus, dass sie einen relativ großen Platz beanspruchen, der unter anderem, jedoch insbesondere von den genannten Förderstrecken zwischen den einzelnen Einrichtungen bestimmt wird.

Des weiteren stellt sich die Sortierschikane insofern als nachteilig dar, als nur solche Kleinteile passieren können, die eine Lage einnehmen, bei der die Köpfe der bspw. Schrauben nach oben und das Gewinde nach unten gerichtet sind, während die anderen Kleinteile, die dieser Lage nicht entsprechen, in den Fördertopf zurückfallen. Dies setzt einen entsprechend hohen Durchsatz an geförderten Kleinteilen voraus, da ein erheblicher Teil nicht entsprechend der definierten Lage ausgerichtet wird und erneut gefördert werden muss.

Die nachgeschaltete Vereinzelungseinrichtung erfordert jedoch, um wirtschaftlich sinnvoll zu arbeiten, eine kontinuierliche Übergabe von Kleinteilen, die durch die bekannten Vorrichtungen nicht in ausreichendem Maße gewährleistet wird.

Der vorliegenden Erfindung liegt daher die Aufgabe zugrunde, eine Vorrichtung der gattungsgemäßen Art so weiter zu entwickeln, dass sie insgesamt eine kompakte Raumform einnimmt und hinsichtlich ihres wirtschaftlichen Betriebes optimiert wird.

Diese Aufgabe wird durch eine Vorrichtung gelöst, die die Merkmale des Anspruches 1 aufweist.

Dadurch, dass dem Vorratsbehälter erfindungsgemäß unmittelbar die Vereinzelungseinrichtung nachgeordnet, das heißt, zugeordnet ist, können die Kleinteile in genau gleicher Folge über die Ausrichtstation und eine Übergabevorrichtung lagegenau der Verarbeitungseinheit übergeben werden, so dass ein kontinuierlicher Betriebsablauf, insbesondere der Bearbeitungseinheit gewährleistet ist.

Die erfindungsgemäße Vorrichtung zeichnet sich besonders dadurch aus, dass sie unter Verzicht auf Förderbänder oder dergleichen in äußerst kompakter Bauweise herstellbar ist.

Nach einer vorteilhaften Weiterbildung der Erfindung besteht die Vereinzelungseinrichtung aus einem sich in vertikaler Ebene drehenden Ring, dessen innere Mantelfläche in radialer Richtung eingelassene Taschen aufweist und der durch Angriff auf die äußere Mantelfläche antreibbar ist, wobei an den beiden Planflächen des Ringes bereichsweise Platten anliegen, die im Überdeckungsbereich mit dem Ring eine Kammer bilden, in der eine geringe Anzahl von zu separierenden Kleinteile bevorratet sind.

Eine in diesem Sinn konzipierte Vereinzelungseinrichtung ermöglicht gegenüber dem Stand der Technik eine hohe Förderrate, das heißt, im wesentlichen ist jede Tasche nach einem Durchlauf der Kammer mit einem Kleinteil belegt und kann so der Ausrichtstation übergeben werden.

Durch die Formgebung der Taschen bzw. deren Anordnung werden die Kleinteile über einen relativ großen Förderwinkelbereich in der jeweiligen Tasche gehalten und kommen erst unmittelbar vor Erreichen der höchsten Drehposition zur Freigabe durch sozusagen ein Auskippen.

In diesem Bereich ist daher auch die Ausrichtstation angeordnet, so dass nur eine geringe Fallhöhe des Kleinteiles zu überwinden ist, wodurch eine sehr sichere Übergabe in die Ausrichtstation erfolgen kann.

Die Förderung der Kleinteile mittels des Ringes erfolgt vorzugsweise getaktet, wobei die Taktauslösung durch einen Sensor erfolgt, mit dem die Belegung jeder sich vorbeidrehenden Tasche mit einem Kleinteil festgestellt wird.

Durch die taktweise Bewegung wird gewährleistet, dass jeweils nur ein Kleinteil in die Ausrichtstation und im weiteren Verlauf in die Verarbeitungseinheit gelangt.

Zur Steuerung der gesamten Vorrichtung kann eine Bedarfsüberwachung vorgesehen sein, die mit der Verarbeitungseinheit gekoppelt ist und mittels der der Betrieb der Vereinzelungseinrichtung für den Fall unterbrochen wird, dass kein weiteres Kleinteil zur Weiterverarbeitung benötigt wird.

Für diesen Fall ist in der Ausrichteinheit ein Sensor vorgesehen, durch den festgestellt wird, ob sich im Ausgang der Ausrichtstation noch ein Kleinteil befindet.

Die Ausrichtstation kann so gestaltet sein, dass zwei Backen vorgesehen sind, die gemeinsam einen Längsschlitz begrenzen, dessen Breite etwa dem Durchmesser des Schaftes des jeweiligen Kleinteiles entspricht, in jedem Fall jedoch kleiner ist als der Durchmesser des Kopfes. Dabei verläuft der Längsschlitz als schiefe Ebene, und zwar ausgehend von der Vereinzelungseinrichtung zur Übergabevorrichtung geneigt, wobei die den Längsschlitz seitlich begrenzenden Randbereiche, die ebenfalls entsprechend geneigt verlaufen, jeweils die Auflage für den Kopf des Kleinteiles bilden. Die Neigung der schiefen Ebene ist dabei so gewählt, dass das Kleinteil problemlos nach unten rutschen kann, wobei es eine in Achsrichtung senkrechte Lage einnimmt, die durch die schiefe Ebene zwangsläufig eintritt.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

### Es zeigen:

- Figur 1: eine erfindungsgemäße Vorrichtung in einer perspektivischen Ansicht,
- Figur 2: einen Teil der Vorrichtung, gleichfalls perspektivisch gezeigt,
- Figur 3: in einer weiteren Einzelheit einen Längsschnitt durch eine Ausrichtstation der Vorrichtung gemäß Figur 1,
- Figur 4: Ein weiteres Ausführungsbeispiel einer Ausrichtstation in einer geschnittenen Seitenansicht und
- Figur 5: die Ausrichtstation nach Figur 4 in einer geschnittenen Vorderansicht.

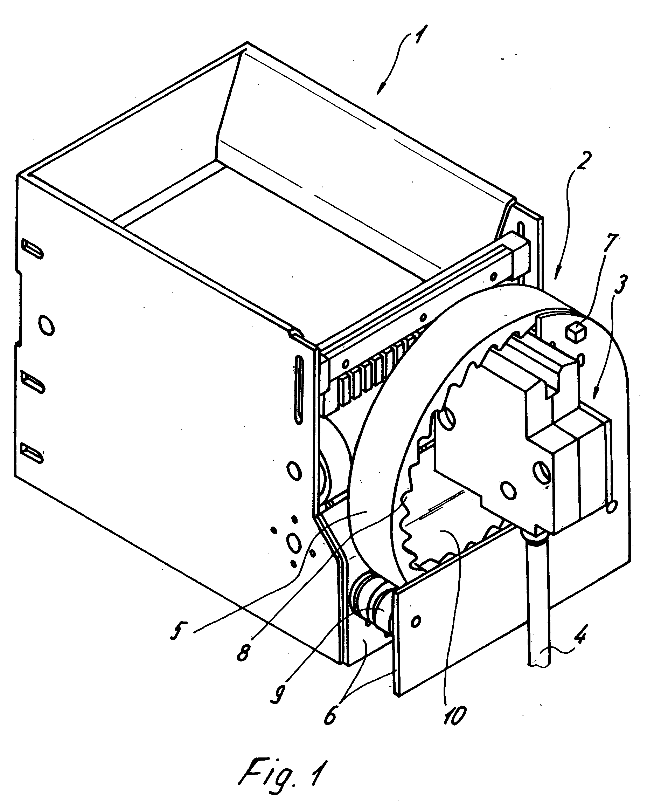

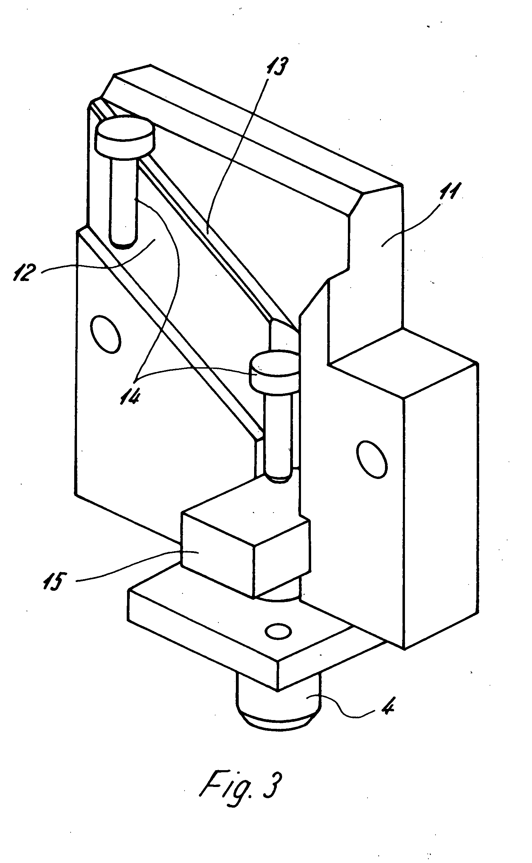

In der Figur 1 ist eine Vorrichtung zum Vereinzeln und Ausrichten von jeweils mit einem Kopf versehenen Kleinteilen 14 (Figur 3) dargestellt, im vorliegenden Ausführungsbeispiel Schrauben, die als Schüttgut in einem Vorratsbehälter 1 deponiert sind.

Dem Vorratsbehälter 1 zugeordnet ist eine Vereinzelungseinrichtung 2, an die sich eine mit einer Übergabevorrichtung 4 verbundene Ausrichtstation 3 anschließt, mit der jedes Kleinteil lagegenau positioniert und so an eine nicht dargestellte Verarbeitungseinheit übergeben wird.

Die Vereinzelungseinrichtung 2 besteht aus einem als Ring 5 ausgebildeten Vereinzelungsrad, dessen innere Mantelfläche in radialer Richtung eingelassene Taschen 8 aufweist, die gleichmäßig über den Umfang verteilt sind.

Die äußere Mantelfläche des Ringes 5 ist auf Antriebsrollen 9 gelagert, durch die der Ring 5 um eine gedachte horizontale Achse in vertikaler Ebene drehbar ist.

An den beiden Stirnflächen des Ringes 5 liegen zwei Platten 6 an, die gemeinsam mit der inneren Mantelfläche des Ringes 5 eine Kammer 10 bilden, in der eine gewisse Anzahl von aus dem Vorratsbehälter 1 transportierten Kleinteilen 14 einliegt, aus den heraus sie vereinzelt gefördert werden.

Im oberen inneren Bereich des Ringes 5 ist die Ausrichtstation 3 angeordnet mit geringen Abstand zu den Taschen 8.

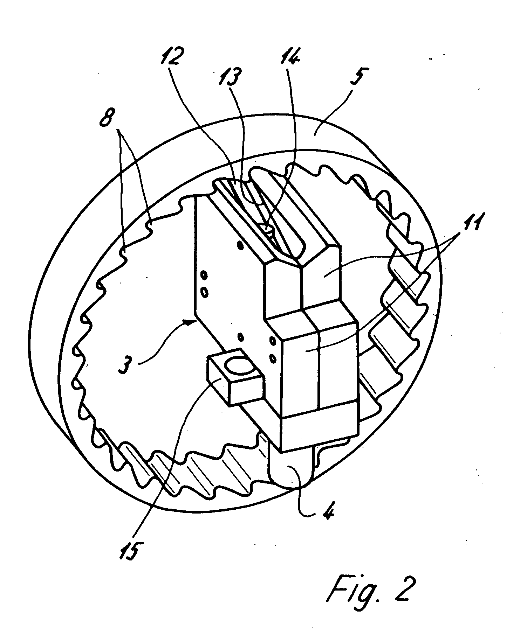

Die Ausrichtstation 3 besteht aus zwei aneinander liegenden Backen 11, die gemeinsam seitlich einen Längsschlitz 12 begrenzen, dessen seitliche Randbereiche 13 bei dem in dem Ausführungsbeispiel nach den Figuren 2 und 3 als schiefe Ebene ausgebildet sind und ausgehend vom Ring 5 nach außen hin geneigt verlaufen.

Schwerkraftbedingt fällt das bis in den Bereich oberhalb der Ausrichtstation 3 geförderte, in der Tasche 8 gelagerte Kleinteil 14 mit seinem Schaft in den Längsschlitz 12, während der Kopf sich an den Randbereichen 13 abstützt. Dabei entspricht die Breite des Längsschlitzes 12 etwa dem Durchmesser des Schaftes des Kleinteiles 14, zumindest ist sie jedoch kleiner als der Durchmesser dessen Kopfes.

Für eine einwandfreie, kontinuierliche Zuführung der Kleinteile zu der Verarbeitungseinheit erfolgt eine taktweise Drehung des Ringes 5 und zwar abhängig davon, ob ein Kleinteil in der Tasche 8 transportiert wird oder nicht. Hierzu ist außenseitig, vorzugsweise an die Platte 6 angeschlossen, ein Sensor 7 vorgesehen, durch den die Belegung der jeweiligen Tasche 8 mit einem Kleinteil 14 erkennbar ist. Die Steuerung der Taktstrecke erfolgt vorzugsweise über einen zweiten Sensor.

Durch die taktweise Bewegung wird überdies gewährleistet, dass sich jeweils nur ein Kleinteil 14 in der Ausrichtstation 3 befindet und mittels Druckluft über die Übergabevorrichtung 4 der Verarbeitungseinheit zugeführt wird.

Wie weiter in der Figur 2 zu erkennen ist, ist an der Ausrichtstation 3 eine Überwachungseinrichtung 15 vorgesehen, mit der erkennbar ist, ob sich in der Ausrichtstation 3 ein Kleinteil 14 in Endlage befindet, so dass eine Beförderung in die Verarbeitungseinheit erfolgen kann.

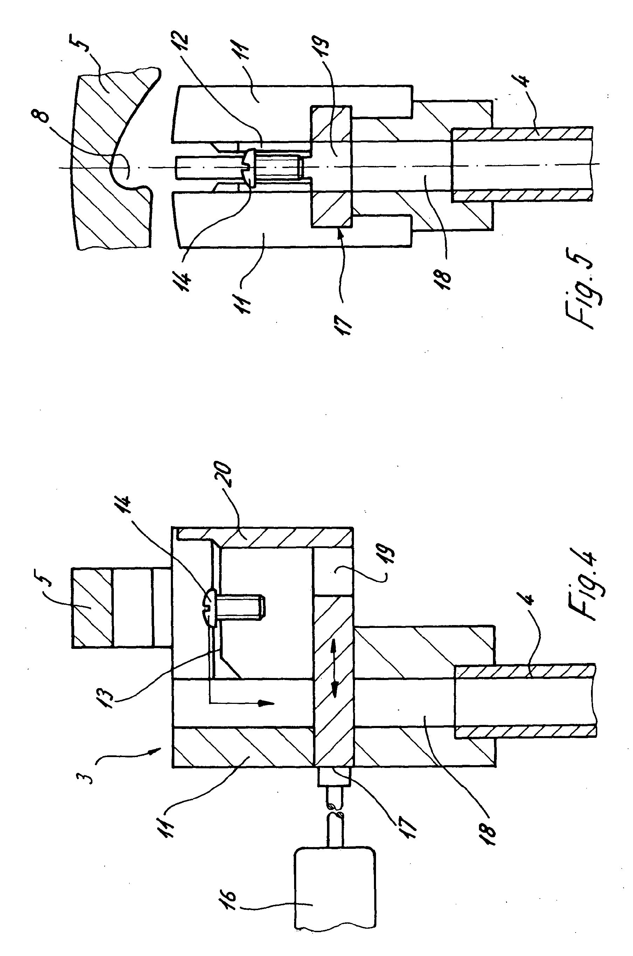

In den Figuren 4 und 5 ist eine Ausrichtstation 3 gezeigt, bei der ein Transport des ausgerichteten Kleinteiles 14 in die Zuführstation 4 mittels eines Mitnehmers 20 erfolgt.

Dieser ist Bestandteil eines an einem pneumatisch oder dergleichen betätigbaren Zylinder 16 angeschlossenen Schiebers 17 und führt das mit seinem Kopf auf den Auflagen 13 aufliegende Kleinteil 14 in einen Zuführschacht 18, der in die Übergabevorrichtung 4 mündet.

Um einen freien Durchgang durch den Zuführschacht 18 zu schaffen, weist der Schieber 17 auf seiner dem Mitnehmer 20 benachbarten Seite einen Durchgang 19 auf, der deckungsgleich in Übergabestellung des Kleinteiles 14 in dem Zuführschacht 18 liegt. Bei seiner Mitnahmebewegung durchfährt der Mitnehmer 20 den Längsschlitz 12, wozu er in seiner Breite etwas geringer sein muss als die Breite des Längsschlitzes 12.

## Patentansprüche

1. Vorrichtung zum Vereinzeln und Ausrichten von jeweils mit einem Kopf versehenen Kleinteilen (14), wie Schrauben, Nieten oder dergleichen, die als Schüttgut in einem Vorratsbehälter (1) deponiert sind, **dadurch gekennzeichnet, dass** dem Vorratsbehälter (1) eine Vereinzelungseinrichtung (2) nachgeordnet ist, an die sich eine mit einer Übergabevorrichtung (4) verbundene Ausrichtstation (3) zum lagegenauen Positionieren und Übergeben jedes Kleinteiles (14) an eine Verarbeitungseinheit anschließt.

2. Vorrichtung nach Anspruch 1, **dadurch gekennzeichnet, dass** die Vereinzelungseinrichtung (2) aus einem Ring (5) besteht, dessen innere Mantelfläche in radialer Richtung eingelassene Taschen (8) aufweist und der über einen an der äußeren Mantelfläche angreifenden Antrieb drehbar ist, wobei sich der Ring (5) um eine gedachte horizontale Achse dreht.

3. Vorrichtung nach Anspruch 2, **dadurch gekennzeichnet, dass** an den beiden Planflächen des Ringes (5) zwei, eine Kammer (10) bildende Platten (6) anliegen.

4. Vorrichtung nach Anspruch 2 oder 3, **dadurch gekennzeichnet, dass** der Ring (5) taktweise drehbar ist.

5. Vorrichtung nach Anspruch 1 oder 2, **dadurch gekennzeichnet, dass** die Ausrichtstation (3) unmittelbar unterhalb einer in der jeweiligen Taktstellung oberen Taschen (8) angeordnet ist, während die Kammer (10) unterhalb der Ausrichtstation (3) positioniert ist.

6. Vorrichtung nach einem der Ansprüche 2 bis 5, **dadurch gekennzeichnet, dass** ein gegenüber dem drehbaren Ring (5) ortsfester Sensor (7) vorgesehen ist, durch den entsprechend der Befüllung jeder Tasche (8) mit einem Kleinteil (14) steuerbar ist.

7. Vorrichtung nach Anspruch 4, **dadurch gekennzeichnet, da**ß die Taktstrecke mittels eines Sensors steuerbar ist.

8. Vorrichtung nach Anspruch 2, **dadurch gekennzeichnet, dass** der Ring (5) über der äußeren Mantelfläche anliegende Antriebsrollen (9) antreibbar ist.

9. Vorrichtung nach einem der Ansprüche 1 bis 6, **dadurch gekennzeichnet, dass** die Ausrichtstation (3) zwei Backen (11) aufweist, zwischen denen ein Längsschlitz (12) gebildet ist, dessen obere, seitliche Randbereichen jeweils eine Auflage (13) für den Kopf des Kleinteiles (14) bilden, wobei die Breite des Schlitzes (12) größer als der Schaftdurchmesser, jedoch kleiner als der Kopfdurchmesser des Kleinteiles (14) ist.

10. Vorrichtung nach Anspruch 9, **dadurch gekennzeichnet, dass** die Auflagen (13) als schiefe Ebenen ausgebildet sind, die sich ausgehend vom Ring (5) nach außen hin neigen.

11. Vorrichtung nach Anspruch 9, **dadurch gekennzeichnet, dass** die Ausrichtstation (3) einen vorzugsweise pneumatisch betriebenen Mitnehmer aufweist, mit dem dann ein jeweils auf den waagerecht ausgerichteten Auflagen (13) aufliegendes Kleinteil (14) in einen Zuführschacht (18) schiebbar ist, der in die Übergabevorrichtung (4) mündet.
